Europäisches Patentamt

European Patent Office

Office européen des brevets

(11) Publication number: **0 448 203 A1**

# EUROPEAN PATENT APPLICATION

(21) Application number: 91300855.3

(22) Date of filing: 01.02.91

(51) Int. Cl.5: **F25B 15/00**, F25B 47/02

(30) Priority: 01.03.90 GB 9004549

(43) Date of publication of application:
25.09.91 Bulletin 91/39

(84) Designated Contracting States:
AT BE CH DE DK ES FR GB GR IT LI LU NL SE

(71) Applicant: IMPERIAL CHEMICAL INDUSTRIES PLC
Imperial Chemical House, Millbank
London SW1P 3JF(GB)

Applicant: CARADON MIRA LIMITED
Cromwell Road
Cheltenham Gloucestershire GL52 5EP(GB)

(72) Inventor: Winnington, Terence Leslie
Hillside House, Jacob's Knoll, Burleigh
Stroud, Gloucestershire GL5 2PR(GB)
Inventor: Lorton, Robert
37 Haywards Road, Charlton Kings
Cheltenham, Gloucestershire GL52 6QR(GB)

(74) Representative: Collingwood, Anthony Robert et al
Imperial Chemical Industries PLC Legal
Department: Patents P.O. Box 6 Bessemer Road
Welwyn Garden City Hertfordshire AL7 1HD(GB)

(54) Heat machines.

(57) In a rotary absorption cycle heat machine defrosting of the evaporator is effected by reducing the speed of rotation of the machine in response to the onset of frost accumulation so as to breach pressure isolation provided by a throttle (25). This allows hot vapour from the generator (14) to feed through to the evaporator (36) and melt the frost layer.

Fig.1.

This invention relates to heat machines and is particularly concerned with rotary heat pumps of the absorption cycle type. Such machines generally comprise a rotary assembly including a vapour generator, a condenser, an evaporator and an absorber so interconnected as to provide cyclic fluid flow paths for a volatile fluid component and an absorbent liquid therefor.

Examples of rotary heat machines of the kind with which the present invention is concerned are disclosed in prior European Patents Nos. 119776 and 149353 and European Patent Application No. 327230.

In a machines such as those disclosed in European Patent Application No. 327230, under certain conditions, the externally presented surfaces of the evaporator may collect frost from the moisture in the surrounding environment. An accumulation of frost on the evaporator heat exchange surfaces reduces the heat exchange efficiency of the evaporator and consequently reduces the overall efficiency of the machine.

According to a first aspect of the present invention there is provided an absorption-cycle heat machine comprising a rotary assembly including a vapour generator, a condenser, an evaporator and an absorber so interconnected as to provide cyclic fluid flow paths for a volatile fluid component and an absorbent liquid therefor, the pressure prevailing at the generator being greater, during normal operation of the machine, than that prevailing at the evaporator, the pressure differential between the generator and the evaporator being maintained during normal operation of the machine by pressure-isolating means, characterised in that said pressure-isolating means is responsive to the rotational speed of the assembly such that the pressure isolation is breached when the rotational speed of the assembly falls below a predetermined value, and in that control means, responsive to a condition or conditions corresponding to or indicative of frost accumulation at the external surface(s) of the evaporator, is provided for initiating a defrosting cycle by reducing the rotational speed of the assembly below said predetermined value thereby permitting hot vapour to flow from the generator to the evaporator.

According to a second aspect of the present invention there is provided an absorption-cycle heat machine comprising a rotary assembly including a vapour generator, a condenser, an evaporator and an absorber so interconnected as to provide cyclic fluid flow paths for a volatile fluid component and an absorbent liquid therefor, the pressure prevailing at the generator being greater, during normal operation of the machine, than that prevailing at the evaporator, the pressure differential between the generator and the evaporator being sustained during normal operation of the machine by liquid conducting throttle means rotating with the assembly and supplied with liquid derived from the higher pressure side of the assembly so as to seal the higher pressure side from the lower pressure side, characterised in that control means, responsive to a condition or conditions corresponding to or indicative of frost accumulation at the external surface(s) of the evaporator, is provided for initiating a defrosting cycle by reducing the rotational speed of the assembly to such an extent that the liquid seal provided by the throttle means is breached thereby permitting hot vapour to flow from the generator to the evaporator.

According to another aspect of the invention there is provided a method of operating an absorption-cycle heat machine which comprises a rotary assembly including a vapour generator, a condenser, an evaporator and an absorber so interconnected as to provide cyclic fluid flow paths for a volatile fluid component and an absorbent liquid therefor, the pressure prevailing at the generator being greater, during normal operation of the machine, than that prevailing at the evaporator, the pressure differential between the generator and the evaporator being maintained during normal operation of the machine by pressure-isolating means which is responsive to the rotational speed of the assembly such that the pressure isolation is breached when the rotational speed of the assembly falls below a predetermined value, said method comprising normally operating the machine at a rotational speed exceeding said predetermined value so that the pressure isolation is maintained, monitoring the machine for any frost formation at the external heat exchange surface(s) of the evaporator and, in the event of such formation, reducing the speed of the assembly below said predetermined value to breach the pressure isolation means and permit flow of hot vapour from the generator to the evaporator to melt the frost, and maintaining said reduced rotational speed for a sufficient interval of time to substantially clear the frost accumulation.

Although the invention is not intended to be limited to any particular manner of detecting the presence of frost accumulation (or conditions in which such accumulation is likely to occur), the condition to which said control means is responsive may for example be temperature, eg. ambient temperature or the temperature of an air (or other heat supplying gas) stream applied externally to the evaporator heat exchange surface(s) for example by means of a fan arrangement. For instance, a flow of air may be induced or otherwise created over the evaporator heat exchange surface(s) and said control means may be responsive to the temperature of the air in the stream after the air has contacted the evaporator heat exchange surface(s). Said control means may also be responsive to the humidity of the air (or other gas) since frost deposition will to some extent depend on humidity as well as temperature.

Alternatively, said control means may be responsive to the surface temperature at the external surface(s) of the evaporator, for example as sensed by one or more thermocouples. In another alternative, the control means may be responsive to a parameter other than temperature: for example, rotational imbalance or change in inertia created by the accumulation of frost; or the detection may be of a visual nature in which for instance a visual mark is monitored by a scanner such that the obscuring of the mark by accumulation of frost is detected.

Preferably, the defrosting cycle is carried out while maintaining the assembly rotating so that once the frost has begun to melt at the interface between the evaporator heat exchange surface and the layer of frost, the centrifugal force generated by rotation of the assembly will assist in throwing off the remaining unmelted frost.

Upon initiation of a defrosting cycle, the assembly may be rotated at said reduced speed for a predetermined interval of time sufficient to ensure that any frost accumulation is cleared, which time interval can for example be determined by experiment.

Alternatively, the control means may be arranged to detect a condition corresponding to or indicative of the evaporator heat exchange surface being substantially free of frost accumulation and thereafter the control means may resume operation of the heat machine at normal speed. Such detection may for example involve response to temperature or other parameter in any of the ways mentioned above in relation to the control means. Thus, for example, the control means may be arranged to monitor the temperature of an air stream passing over the evaporator heat exchange surface(s), such monitoring taking place at a point downstream of the zone at which heat exchange occurs between the evaporator and the air stream.

When normal operation is to be resumed after a defrosting cycle has been carried out, in the case where the pressure isolating means comprises a liquid conducting throttle preferably a source of heat associated with the vapour generator is controlled so as to reduce or cease input of heat temporarily to the generator and hence reduce or cease vapour production, thereby allowing the pressures at the generator and evaporator zones to substantially equalise. In this manner, the throttle can be allowed to refill and re-establish isolation; thereafter the rotational speed of the assembly may be raised to normal operating speed. Prior to or after normal speed operation is resumed, the heat input to the generator from said source may be recommenced.

The machine may be a double effect machine in which the generator/condenser and/or the absorber/evaporator are constituted by two stages; for example, the generator/condenser may comprise a first stage comprising a primary generator and an intermediate condenser and a second stage comprising an intermediate generator and a primary condenser. Similarly, the absorber/evaporator may comprise a primary evaporator and an intermediate absorber and an intermediate evaporator and a primary absorber. Such double effect machines are disclosed in greater detail in prior European Patent No. 149353, the disclosure of which is incorporated herein by reference.

Where the heat machine is a double effect machine having two vapour generator/condenser stages and at least a primary evaporator stage, each at a different pressure, the pressure isolating means may be arranged to isolate the primary evaporator from either or both of the primary and intermediate generators. Thus, in one embodiment of the invention, the primary and intermediate generators are isolated from each other, during normal operation, by first pressure isolating means and the intermediate generator and the evaporator are isolated from each other, during normal operation, by second pressure isolating means. In such an embodiment, the reduction in speed may be such that only the second pressure isolating means is breached whereby vapour generated in the intermediate generator is fed through to the evaporator. Alternatively, the reduction in speed may be such that both pressure isolating means are breached whereby vapour from both generators is fed through the evaporator.

In a preferred embodiment, at least two of the zones which, in operation of the machine, contain working fluid at different pressures, are interconnected by U-tube throttle means for transferring working fluid from the higher pressure zone to the lower pressure zone, the U-tube throttle opening into each zone at a position radially inwards of the outer periphery of the respective zone and means being provided in the higher pressure zone for collecting working fluid from a radially outer region of that zone and feeding the working fluid radially inwardly to the U-tube throttle.

The present invention will now be described by way of example only with reference to the accompanying drawings, in which:

Figure 1 is an axial section through a rotary absorption cycle heat pump in accordance with the invention; and

Figure 2 is an axial section through a multi-effect rotary absorption cycle heat pump according to the invention.

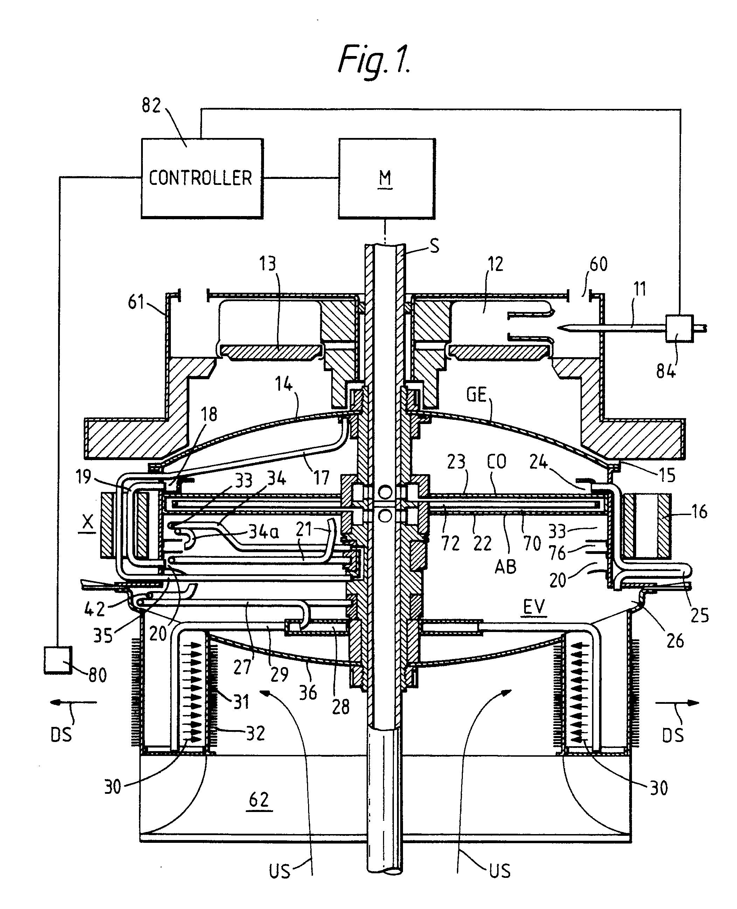

Referring firstly to Figure 1, the heat pump illustrated is described fully in prior European Patent Application No. 327230. For the purposes of the present invention, the heat pump will be described briefly; for a full description reference should be made to EPA 327230, the disclosure of which is incorporated herein by reference. An aqueous working mixture is circulated around a hermetically sealed system consisting of an evaporator EV, an absorber AB, a solution heat exchanger X, a vapour generator GE and a condenser CO in that sequence upon a shaft at S, for rotation therewith, the shaft S being driven by a variable speed drive motor M.

Gas, fed via pipe 11, is burnt in burner 12 with air which is drawn in through ports 60 in the housing 61; the burner is fitted with radiant plaques 13 which emit the energy of the combustion in approximately equal amounts of radiant heat and heat contained in the combustion products. The heat energy emitted from the stationary plaques 13 impinges on the rotary dished plate 14 of the generator GE. Hot flue gas from the burner 12 flows over the outer surface of generator 14; it is then expelled via annular slot 15 and loses further amounts of heat to the solution heat exchanger 16 as it flows thereover. In the region of slot 15, heat transfer to the generator plate 14 is primarily by forced convection.

Mixture R (refrigerant rich refrigerant/absorber solution) is charged to the inner surface of dished plate 14 via pipe 17, it absorbs heat therefrom such that refrigerant is vaporised (vaporised refrigerant being referred to hereinafter as VR) as the solution flows radially outwards over the surface of 14 and Mixture L (refrigerant lean solution) is expelled via port 18. From port 18, Mixture L flows in the pipe 19 to the channel 20 via solution heat exchanger 16 which is located radially outboard of the rotary assembly. From channel 20, Mixture L is scooped via stationary pipe 21 and is charged to the surface 22 of the absorber disc adjacent the axis thereof.

VR generated at the inner surface of dished plate 14 is condensed on surface 23 of the condenser disc. Condensed refrigerant (herein called CR) flows radially outwards across the surface 23 and collects in trough 24. It flows from trough 24 into U-tube 25 which acts as a throttle and thence into trough 26. From trough 26 it is scooped by stationary pipe 27 and fed into rotating header ring 28. From header ring 28, it flows through pipes 29 and is sprayed radially inwardly therefrom (see arrows 30) via orifices into elliptical tubes 31 which are dependent from dished plate 36 and which are provided with fins 32 transverse thereto. A portion of the CR evaporates from the inner surface of tubes 31 to form VR. Unvaporised refrigerant overflows from the tube 31 to the channel 26 and hence is recycled to the tubes 31 via 27, 28 and 29.

Ambient air constituting a low grade source of heat is drawn, e.g. at about 1 $m^3$/sec, through the shroud 62, it donates heat to the fins 32 and tubes 31 of the evaporator and is then expelled radially outwards. The flow of air is indicated by arrows US (upstream of the evaporator) and DS (downstream of the evaporator).

VR formed in the evaporator flows to the surface of the absorber where it is absorbed in Mixture L with the formation of Mixture R. Mixture R flows radially outwards to the channel 33 where it is scooped by stationary pipe 34 and flows via pipe 35 through the solution heat exchanger 16 to pipe 17 and hence the cycle is completed.

A stationary skimming pipe 34a is associated with the channel 33 in order to control the level of liquid in channel 33. The pipe 34a runs partially submerged in the liquid and feeds any excess into an adjacent channel 76. The channels 33 and 76 are interconnected by a small hole or holes to bleed water-rich absorbent back to channel 33. Similarly, a scoop pipe 42 is associated with the channel 26 to control the liquid level therein, the scoop pipe 42 running partially submerged and directing excess liquid in channel 26 into for example channel 20.

The various scoop pipes 21, 27, 34, 34a, 42 all have their inlets directed in the direction opposite to the direction of the rotation of the rotary assembly, and hence the direction of motion of the liquid, and they are all restrained against rotation by torque-reaction means which may be magnetic or may be in the form of a weight (not shown) freely mounted on the shaft S so that the weight remains substantially stationary as the rotary assembly rotates. Water, the heat-accepting fluid, flows through the shaft S from the evaporator end, radially outward through the absorber in contact with disc 22, radially inward through the condenser in contact with disc 23 and is expelled from the shaft adjacent the generator end thereof. It will be seen that the absorber disc 22 and the condenser disc 23 bound a chamber 70 which forms a heat exchanger common to the condenser and the absorber thereby avoiding the need for separate heat exchangers. A partition 72 separates the chamber 70 into two radially and circumferentially extending zones comprising a gap between the absorber disc 22 and the partition 72 and a gap between the condenser disc 23 and the partition 72, the two zones being in communication at the periphery of the partition 72.

Typically the pressure prevailing in the GE/CO zone is of the order of 0.3 bar whilst that prevailing in the AB/EV zone is of the order of a few millibars.

During normal operation of the machine with the assembly rotating at a speed of the order of 500 rpm, the liquid of the throttle 25, by virtue of the centrifugal force generated by rotation, is capable of maintaining the pressure differential.

Under certain heat pump conditions, the exterior surfaces of the evaporator may collect frost from the moisture in the surrounding atmosphere with consequent reduction in heat exchange efficiency. The onset of frosting in the embodiment of Figure 1 is detected by locating a suitable temperature sensor 80 in the downstream side of the air stream passing over the evaporator EV. The output of the sensor 80 is connected to a controller 82 which controls the speed of the motor M and hence the heat pump assembly. When the temperature sensed by sensor 80 is indicative of the build up of frost on the fins 32 of the evaporator, the controller 82 initiates a defrost cycle. This is achieved by reducing the rotational speed of the heat pump assembly to a level at which the centrifugal force acting on the liquid in the throttle 25 is insufficient to enable the throttle to sustain the pressure differential between the GE/CO zone and the AB/EV zone.

In these circumstances, the pressure isolation provided by the throttle 25 is breached and hot vapour generated at the GE is free to pass through the throttle 25 into the AB/EV zone where it can enter the tubes 31 and initiate melting of the frost layer at the interface between the fins 32 and the bulk of the frost build-up. In practice, because the assembly continues to rotate during the defrost cycle, the frost layer will begin to break up and thrown off the fins 32 by centrifugal force, ie. the energy consumption and time required may be significantly less than for a static system in which the substantially the entire thickness of the frost layer has to be melted.

A further advantage with a rotary heat pump is that the build-up of frost will tend to be limited in the first place because and water vapour condensing on the external evaporator surfaces will tend to be thrown off during normal operation of the heat pump. Hence, frost will only tend to build up in extreme environmental conditions when the water vapour tends to deposit directly on the evaporator surfaces as frost.

The defrosting cycle may be carried out until the sensor 80 registers a temperature corresponding to the evaporator being free of frost. Alternatively, the controller 82 may include a timing means set to time out an interval during which exposure of the internal surfaces of the evaporator to the hot vapour should be sufficient to complete defrosting. In either case, once defrosting has been completed, the controller 82 then enters a mode in which it further reduces the speed of the assembly, for example to about 100 rpm, and cuts off or reduces the heat input to the generator from the burners 12 by control of a valve 84. This control mode enables pressures in the GE/CO and AB/EV zones to substantially equalise so that the throttle 25 can refill with liquid from the channel 24 and/or channel 26 to re-establish the liquid lock. Thereafter, the controller produces an output to the motor so as to resume normal speed operation of the heat pump.

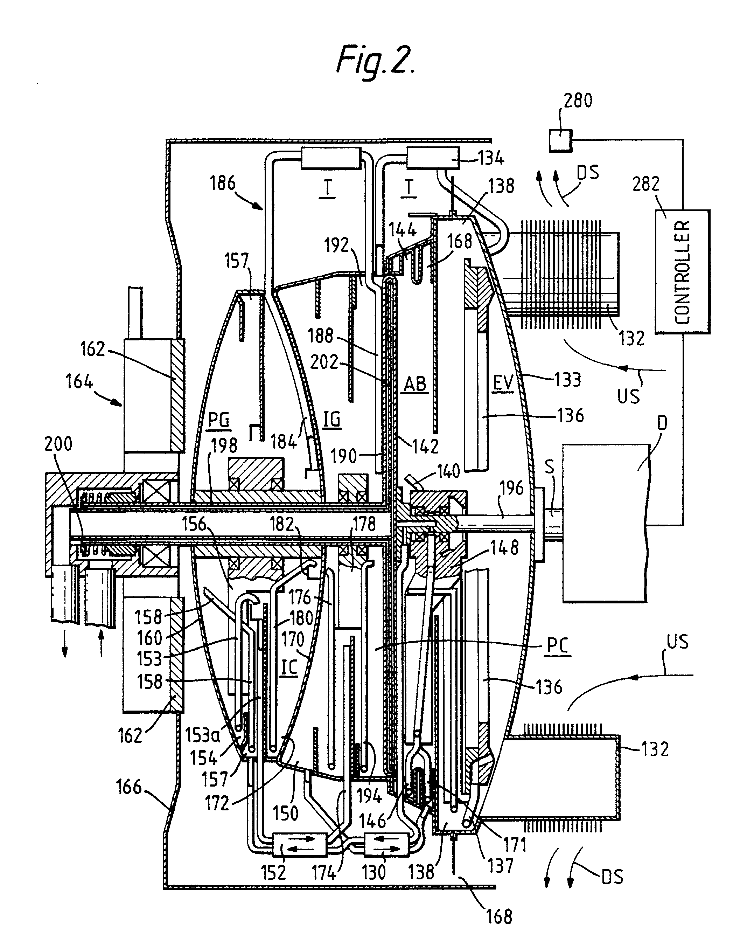

The heat pump illustrated in Figure 1 is a single effect machine. The invention is however equally applicable to double-effect machines such as those described in prior European Patent No. 149353. Thus, referring to Figure 2, the machine comprises an evaporator EV, an absorber AB, a first solution heat exchanger 130, a second solution heat exchanger 152, a primary vapour generator PG, an intermediate condenser IC, an intermediate generator IG, a primary condenser PC and back to the evaporator EV. The working solution comprises a mixture of a vaporisable component such as water (as the refrigerant) and an absorbent for the water, eg. a mixture of alkali hydroxides as disclosed in European Patent No. 208427.

The evaporator EV is constructed generally in accordance with the teaching in European Patent Application No. 327230 and comprises a plurality of angularly spaced tubes 132 of elliptical cross-section mounted on wall 133 and into which condensed refrigerant routed from the primary condenser PC via U-tube throttle 134 is injected by means of a distributor device 136 (described more fully in European Patent Application 327230) which, by means of pipe 137, collects the water from an annular channel 138 at the periphery of the zone encompassing the evaporator EV and the absorber AB. In the evaporator tubes 132, some of the water is evaporated by heat exchange with a flow of ambient air (or other source of low grade heat) and the resulting vapour is recombined with absorbent when it comes into contact with absorbent sprayed, via pipe 140, onto a wall 142. The resulting heat of solution is transferred through the wall 142 to a load as described hereinafter.

The resulting water rich working solution collects in annular channel 144 and, by virtue of its kinetic energy, is transferred via pipe 146 (forming part of a rotationally restrained Pitot pumping arrangement 148 more fully described in European Patent Application No. 327230) to solution heat exchanger 130 in which it undergoes heat exchange with water depleted working solution from annular channel 150 associated with the intermediate generator IG. The water rich solution then passes to a second solution heat exchanger 152 in which heat exchange occurs with water depleted working solution transferred, via pipes 153 and 153a, from annular channel 154 associated with the primary generator PG, such transfer being effected by means of a rotationally restrained Pitot pump 156 operating in similar fashion to pump 148. The pipe 153 is restrained against rotation whilst the pipe 153a rotates with the rotary structure of the machine.

After passing through the heat exchanger 152, the water rich solution enters annular channel 157 where it is scooped by pipe 158 forming part of the Pitot pump 156 and discharged onto the wall 160. The opposite side of the wall 160 is heated by radiant plaques 162 of burner 164 which is supplied with gas to produce high grade heat in the form of radiant energy from the plaques 162 and heat contained in the combustion products. Hot flue gases from the burner 164 flow over the external surface of the primary generator wall 160 shrouded by housing 166 and are exhausted via an annular slot 168 after passing over the heat exchangers 130 and 152 where further heat is given up by the flue gases by heat exchange with the fluids flowing through exchangers 130 and 152.

The water rich solution impinging on the primary generator wall 160 is heated as it flows radially outwards by heat exchange across the thickness of the wall resulting in the vaporisation of the water component. The depleted component, consisting of absorbent and unvaporised water, flows across the face of the wall 160 and collects in annular channel 154 for transfer back to the absorber via heat exchangers 152 and 130, the intermediate generator IG and annular channel 168 where it is scooped by pipe 171 forming part of the Pitot pump 148 and fed to pipe 140 for discharge onto the absorber wall 142. As a result of the vaporisation of the water, the pressure developed within the zone encompassing the primary generator PG and the intermediate condenser IC is typically of the order of 3.0 bar absolute.

The vaporised component eventually comes into contact with the wall 170 common to the intermediate condenser IC and the intermediate generator IG where, as a result of heat exchange with cooled water depleted solution on the IC side of the wall 170, the water vapour on the IC side condenses and flows radially outwardly to annular channel 172. The fluid supplied to the IG side of the wall 170 is derived from channel 154 via pipes 153, 153a, 174 and 176, the latter forming part of rotationally restrained Pitot pump 178 arranged to operate in similar fashion to pumps 148 and 156. Because the water depleted solution from channel 154 is passed through heat exchanger 152 in heat exchange relation with relatively cool water rich solution derived from the absorber, it is relatively cool and therefore takes up heat from the water vapour on the IC side of the wall 170 to produce the desired condensation. The water depleted solution supplied to the intermediate generator IG will, by virtue of heat transfer across the wall 170, generate further water vapour which will travel across to the primary condenser PC and condense.

The condensed water collecting in channel 172 is scooped by pipe 80 forming part of the Pitot pump 156 and transferred to an annular channel 182 proximate the rotary axis of the machine. From channel 182, the condensed water is fed radially outwardly by pipe 184 which constitutes one leg of U-tube throttle 186 which rotates with the machine. The other leg 188 of the throttle 186 feeds the condensate into the lower pressure zone (typically of the order of 0.3 bar absolute) encompassing the IG and the PC. The condensate is supplied to a point proximate the rotary axis and discharges onto the wall 190 so as to flow radially outwardly, along with condensate derived from the water vapour produced at the intermediate generator IG, into annular channel 192 and thence to the evaporator EV via the U-tube throttle 134, channel 138 and distributor 136.

Part of the condensate supplied to the channel 192 is continuously recirculated by means of pipe 194 forming part of the Pitot pump 178. It will be seen that the throttle 186 is capable of providing, within the confines of the housing 166 (which, in any event has to have a certain diameter in order to accommodate the outboard located heat exchangers 130 and 152), a column height exceeding the radial dimensions of the PC/IC and IG/PC zones.

It will be noted that the assembly of pipes 153a, 174 and heat exchanger 152 are also arranged to function as a U-tube throttle. In this case, the working fluid used comprises refrigerant-depleted solution fed to the pipe 153a by pipe 153 and, because the refrigerant depleted solution will have a higher specific gravity (assuming that the absorbent is a mixture of hydroxides as previously described), the column height needed to sustain the pressure differential is somewhat less than in the case of the throttle 186 which means that the lengths of pipes 153a and 174 can be made correspondingly shorter as shown.

The assembly described above is mounted as a unit for rotation about the axis of a shaft structure S driven by motor D. The shaft structure includes a solid section 196 and a hollow section comprising a pair of concentric inlet and outlet tubes 198, 200 for feeding a fluid medium to be heated through a chamber 202 bounded by the walls 142 and 190 associated with the absorber AB and primary condenser PC respectively, the chamber 202 being centrally partitioned so that the heat accepting fluid flows initially over the primary condenser wall 190 and then over the absorber wall 142 before exiting via the outlet tube 200. The shaft structure in addition serves to mount the Pitot pumping arrangements 148, 156 and 178 via respective bearing assemblies so that the pumps can remain stationary while the remaining machine components rotate with the shaft structure.

As in the embodiment of Figure 1, frost accumulation may be detected by means of a temperature sensor 280 located in the air stream flow DS downstream of the evaporator and the sensor 280 is connected to a controller 282 for controlling the speed of the variable speed drive motor D. In this embodiment, on detection of frost accumulation and slowing down of the assembly (as described in connection with Figure 1), at least the throttle 134 is designed to be breached so that hot vapour from the intermediate generator is fed into the evaporator region to effect frost removal in the manner previously described. If desired, the throttle 186 and/or the throttle constituted by pipes 153a and 174 and heat exchanger 152 may also be designed so as to be breached during slow down of the assembly so that hot vapour from the primary generator can feed through to the evaporator. After the defrosting cycle has been completed, normal operation of the machine may be resumed in a manner similar to that described in connection with Figure 1.

## Claims

1. Absorption-cycle heat machine comprising a rotary assembly including a vapour generator, a condenser, an evaporator and an absorber so interconnected as to provide cyclic fluid flow paths for a volatile fluid component and an absorbent liquid therefor, the pressure prevailing at the generator being greater, during normal operation of the machine, than that prevailing at the evaporator, the pressure differential between the generator and the evaporator being maintained during normal operation of the machine by pressure-isolating means, characterised in that said pressure-isolating means is responsive to the rotational speed of the assembly such that the pressure isolation is breached when the rotational speed of the assembly falls below a predetermined value, and in that control means, responsive to a condition or conditions corresponding to or indicative of frost accumulation at the external surface(s) of the evaporator, is provided for initiating a defrosting cycle by reducing the rotational speed of the assembly below said predetermined value thereby permitting hot vapour to flow from the generator to the evaporator.

2. Absorption-cycle heat machine comprising a rotary assembly including a vapour generator, a condenser, an evaporator and an absorber so interconnected as to provide cyclic fluid flow paths for a volatile fluid component and an absorbent liquid therefor, the pressure prevailing at the generator being greater, during normal operation of the machine, than that prevailing at the evaporator, the pressure differential between the generator and the evaporator being sustained during normal operation of the machine by liquid conducting throttle means rotating with the assembly and supplied with liquid derived from the higher pressure side of the assembly so as to seal the higher pressure side from the lower pressure side, characterised in that control means, responsive to a condition or conditions corresponding to or indicative of frost accumulation at the external surface(s) of the evaporator, is provided for initiating a defrosting cycle by reducing the rotational speed of the assembly to such an extent that the liquid seal provided by the throttle means is breached thereby permitting hot vapour to flow from the generator to the evaporator.

3. A machine as claimed in Claim 1 or 2 in which said control means maintains the assembly in rotation during said defrosting cycle.

4. A machine as claimed in any one of Claims 1-3 in which at least two of the zones which, in operation of the machine, contain working fluid at different pressures, are interconnected by U-tube throttle means for transferring working fluid from the higher pressure zone to the lower pressure zone, the U-tube throttle opening into each zone at a position radially inwards of the outer periphery of the respective zone and means being provided in the higher pressure zone for collecting working fluid from a radially outer region of that zone and feeding the working fluid radially inwardly to the U-tube throttle.

5. A machine as claimed in Claim 1 in which there are two vapour generators, namely a primary vapour generator and an intermediate vapour generator, and in which the pressure isolating means is arranged to isolate the evaporator from either or both of the primary and intermediate generators.

6. A machine as claimed in Claim 5 in which the primary and intermediate generators are isolated from each other, during normal operation, by first pressure isolating means and the intermediate generator and the evaporator are isolated from each other, during normal operation, by second pressure isolating means.

7. A machine as claimed in Claim 6 in which the reduction in speed is such that only the second pressure isolating means is breached whereby vapour generated in the intermediate generator is fed through to the evaporator.

8. A machine as claimed in Claim 6 in which the reduction in speed is such that both pressure isolating means are breached whereby vapour from both generators is fed through the evaporator.

9. A method of operating an absorption-cycle heat machine which comprises a rotary assembly including a vapour generator, a condenser, an evaporator and an absorber so interconnected as to provide cyclic fluid flow paths for a volatile fluid component and an absorbent liquid therefor, the pressure prevailing at the generator being greater, during normal operation of the machine, than that prevailing at the evaporator, the pressure differential between the generator and the evaporator being maintained during normal operation of the machine by pressure-isolating means which is responsive to the rotational speed of the assembly such that the pressure isolation is breached when the rotational speed of the assembly falls below a predetermined value, said method comprising normally operating the machine at a rotational speed exceeding said predetermined value so that the pressure isolation is maintained, monitoring the machine for any frost formation at the external heat exchange surface(s) of the evaporator and, in the event of such formation, reducing the speed of the assembly below said predetermined value to breach the pressure isolation means and permit flow of hot vapour from the generator to the evaporator to melt the frost, and maintaining said reduced rotational speed for a sufficient interval of time to substantially clear the frost accumulation.

10. A method as claimed in Claim 9 in which the pressure isolation means comprises a liquid conducting throttle and in which, upon completion of a defrosting cycle, heat supply to the vapour generator is modified to reduce or cease vapour production to allow the throttle to refill with liquid and re-establish isolation, normal speed operation of the assembly thereafter being resumed.

# Fig.1.

# Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | EP-A-0 327 230 (IMPERIAL CHEMICAL IND.) * Page 8, line 37 - page 12, line 10; figures 1-7 * | 1,2,4,9 | F 25 B 15/00 F 25 B 47/02 |
| A | EP-A-0 052 542 (KAUFFMAN) * Page 9, line 18 - page 29, line 11; figures 6-8 * | 5 | |
| A | FR-A-9 002 30 (VAN BERKEL) | | |
| A | US-A-2 181 376 (LYNGER) | | |
| A | GB-A-1 215 22 (RANSOMES & RAPIER) | | |
| A | US-A-2 156 628 (HINTZE) | | |
| A | WO-A-8 606 156 (KONGSBERG VAPENFABRIKK) | | |

TECHNICAL FIELDS
SEARCHED (Int. Cl.5)

F 25 B

The present search report has been drawn up for all claims

| Place of search | Date of completion of search | Examiner |
|---|---|---|
| The Hague | 11 June 91 | BOETS A.F.J. |